Europäisches Patentamt

European Patent Office

Office européen des brevets

(11) Veröffentlichungsnummer: **0 538 670 A1**

# EUROPÄISCHE PATENTANMELDUNG

(21) Anmeldenummer: **92117076.7**

(51) Int. Cl.⁵: **G01C 19/72**

(22) Anmeldetag: **07.10.92**

(30) Priorität: **24.10.91 DE 4135132**

(43) Veröffentlichungstag der Anmeldung:
**28.04.93 Patentblatt 93/17**

(84) Benannte Vertragsstaaten:
**AT BE CH DE DK ES FR GB GR IT LI LU MC NL PT SE**

(71) Anmelder: **Bodenseewerk Geosystem GmbH Alte Nussdorfer Strasse 15 W-7770 Überlingen/Bodensee(DE)**

(72) Erfinder: **Bernard, Walter, Dr. Säntisblick 17 W-7758 Daisendorf(DE)**
Erfinder: **Geister, Götz, Dr. Bahnhofstrasse 88 W-7777 Salem(DE)**

(74) Vertreter: **Weisse, Jürgen, Dipl.-Phys. et al Patentanwälte Dipl.-Phys. Jürgen Weisse Dipl.-Chem. Dr. Rudolf Wolgast Bökenbusch 41 Postfach 11 03 86 W-5620 Velbert 11 Langenberg (DE)**

(54) **Passiver Ringresonatorkreisel.**

(57) Bei einem Sensor, der einen nichtreziproken optischen Effekt benutzt, mit einem passiven Ringresonator (18) wird das Licht, das den Ringresonator in dem ersten Umlaufsinn durchlaufen hat, dem Licht, das den Ringresonator mit dem zweiten Umlaufsinn durchlaufen hat, zur Erzeugung einer Interferenz überlagert. Eine Detektoranordnung (26) enthält einen einzigen Detektor, der von dem interferierenden Licht beaufschlagt ist.

Fig. 1

EP 0 538 670 A1

Die Erfindung betrifft einen Detektor, der einen nichtreziproken optischen Effekt benutzt, enthaltend einen passiven Ringresonator eine Lichtquelle, Mittel zum Einkoppeln des Lichtes der Lichtquelle in den Ringresonator mit einem ersten und einem dazu entgegengesetzten zweiten Umlaufsinn, Mittel zum Auskoppeln von Licht aus dem Ringresonator und eine von dem ausgekoppelten Licht beaufschlagte Detektoranordnung.

Ein nichtreziproker, optischer Effekt ist beispielsweise des Sagnac-Effekt. Durch Spiegel oder Lichtleiter wird ein Lichtweg definiert, der eine Fläche umrundet. In Ruhe ist die optische Weglänge dieses Lichtweges für den einen wie den anderen Umlaufsinn des Lichtes gleich. Führt die Anordnung jedoch eine Drehbewegung aus, dann werden die optischen Weglängen für das "linksherum" und das "rechtsherum" laufende Licht unterschiedlich. Die Weglängendifferenz ist proportional der Winkelgeschwindigkeit und der von dem Lichtweg umschlossenen Fläche. Unter Benutzung dieses Sagnac-Effektes können daher Sensoren für Winkelgeschwindigkeiten aufgebaut werden.

Es sind verschiedene Typen solcher auf dem Sagnac-Effekt beruhenden Sensoren bekannt.

Bei Glasfaser-Kreiselsensoren ist eine Glasfaser zu einer Spule mit vielen Windungen um eine Fläche herum gewickelt. Die Glasfaser hat Zwei Enden. Mittels eines Strahlenteilers wird Licht von einem Laser sowohl auf das eine als auch auf das andere Ende der Glasfaser geleitet. Das auf das eine Ende geleitete Lichtbündel durchläuft die Spule mit einem ersten Umlaufsinn, also etwa "linksherum". Das auf das andere Ende der Glasfaser geleitete Lichtbündel durchläuft die Spule mit einem zweiten, dem ersten Umlaufsinn entgegengesetzten Umlaufsinn, also etwa "rechtsherum". Bei einer Drehung der Spule um ihre Achse oder, beser gesagt, um die Normale zu ihrer Querschnittsfläche ändet sich die optische Weglänge für das linksherum und das rechtsherum laufende Lichtbündel gegensinnig. Die An den Enden der Glasfaser austretenden Lichtbündel, das "rechtsherum" laufende an dem besagten einen Ende und das "linksherum" laufende an dem besagten anderen Ende der Glasfaser, werden überlagert und an einem Detektor zur Interferenz gebracht. Die Interferenzlinien verlagern sich, wenn der Sensor einer Winkelgeschwindigkeit unterworfen ist. Das wird als Detektor-Ausgangssignal beobachtet (Holzapfel "Optische Kreiselsensoren" VDI-Bericht Nr. 509, 1984). Die Empfindlichkeit von Glasfaser-Kreiselsensoren kann durch mehrfache Umrundung der Querschnittsfläche in Form einer Spule erhöht werden.

Zur Erzielung einer hohen Empfindlichkeit eines solchen Glasfaser-Kreiselsensors ist daher eine lange Faser in einer Spule mit vielen Windungen erforderlich. Dabei sind zur Vermeidung von unzulässig starker Dämpfung Fasern hoher Qualität erforderlich. Solche Fasern sind teuer.

Die DE-A-3 805 904, die DE-A-3 805 905, die DE-A-3 912 005 und die DE-A-3 919 060 zeigen Glasfaser-Kreiselsensoren mit Sechstorkopplern.

Es sind weiterhin Sensoren mit Ringlasern bekannt. Ein Ringlaser weist einen Ringresonator auf. Ein solcher Ringresonator bildet einen in sich geschlossenen optischen Weg, der z.B. von drei Planspiegeln gebildet ist. Dieser optische Weg ist in einem Gefäß gebildet, in welchem eine Gasentladungsstrecke vorgesehen ist. Die Gasentladungsstrecke in dem Ringresonator bildet einen optischen Verstärker. Bei hinreichend hoher Verstärkung der Gasentladung arbeitet das System als Ringlaser. Ein Bruchteil der erzeugten Laserstrahlen wird durch einen teildurchlässigen Spiegel ausgekoppelt. Es ist dabei bekannt, das ausgekoppelte Licht des Ringlasers zur Interferenz zu bringen, wobei das Interferenzmuster durch zwei nebeneinander angeordnete Detektoren abgetastet wird. In Ruhe ist das Interferenzstreifenmuster ebenfalls in Ruhe. Bei Auftreten einer Winkelgeschwindigkeit ändern sich die optischen Weglängen des Ringresonators für das "linksherum und das "rechtsherum" laufende Lichtbündel. Dadurch arbeitet der Ringlaser "rechtsherum" und "linksherum" mit unterschiedlichen Frequenzen. Die Interferenzstreifen laufen über die Detektoren hinweg. Die zwei Detektoren gestatten dabei eine Richtungsbestimmung. An den Detektoren treten Signale mit der Schwebungsfrequenz auf. Diese Schwebungsfrequenz ist proportional der Winkelgeschwindigkeit. Durch Aufsummieren der durch die Interferenzstreifen erzeugten Impulse kann der Drehwinkel erhalten werden.

Solche Laserkreisel sind aufwendig. Die Laserkreisel haben außerdem infolge von Frequenzkopplungen ("lock in") eine ausgeprägte Ansprechschwelle. Durch eine Überlagerte Zitterbewegung ("Dither") muß diese Ansprechschwelle überschritten werden (Holzapfel, "Optische Kreiselsensoren", VDI-Berichte Nr. 509, 1984).

Es sind schließlich Sensoren mit passiven Ringresonatoren bekannt. Passive Ringresonatoren enthalten wieder einen geschlossenen optischen Weg. In diesen optischen Weg wird Licht von einem Laser über Koppler oder teildurchlässige Spiegel einmal "linksherum" und einmal "rechtsherum" eingekoppelt. Der Ringresonator bildet dabei nicht wie bei einem Laserkreisel einen Teil des Lasers sondern einen von dem Laser unabhängigen optischen Resonator. Über Koppler oder einen teildurchlässigen Spiegel wird dann ein definierter Teil des "linksherum" in dem Ringresonator laufenden Lichtes ausgekoppelt und auf einen ersten photoelektrischen Detektor geleitet. Ebenso wird ein definierter Teil des "rechtsherum" in dem Ringresonator laufenden Lichts ausgekoppelt und auf einen zweiten photoelektrischen Detektor geleitet. Die Signale der beiden photoelektrischen Detektoren hängen davon ab, wie die Frequenz des Laserlichts zu den für die beiden Umlaufrichtungen existierenden Resonanzfrequenzen des Ringresonators liegt. Bei einer Winkelgeschwindigkeit des Ringresonators um eine zur Ebene des Ringresonators senkrechte Achse, werden diese Resonanzfrequenzen gegensinnig verändert. Aus den elektrischen Signalen der Detektoren werden durch Signalverarbeitung oder Regelkreise Signale erzeugt, welche die Winkelgeschwindigkeit des Ringresonators um eine zur Ebene des Ringresonators senkrechte Achse wiedergeben. Hierfür sind verschiedene Lösungen bekannt (z.B EP-B-0 290 723).

Die bekannten Sensoren mit passiven Ringresonatoren erfordern in der Regel eine optische Isolation des als Lichtquelle dienenden Lasers von dem Ringresonator durch eine "optische Diode". Anderenfalls wird die Frequenz des Lasers von dem Ringresonator beeinflußt. Eine solche optische Isolation ist sehr aufwendig. Verzichtet man auf eine solche optische Isolation wie etwa bei dem Sensor nach der EP-B-0 290 723, dann erfolgt die Regelung der Frequenz des Lasers, etwa über den Strom, nit einer starken Rückkopplung. Das beeinflußt die Empfindlichkeit des Sensors.

Der Erfindung liegt die Aufgabe zugrunde, einen Sensor der eingangs genannten Art zu vereinfachen und zu verbilligen.

Erfindungsgemäß wird diese Aufgabe dadurch gelöst, daß

(a) das Licht, das den Ringresonator in dem ersten Umlaufsinn durchlaufen hat, dem Licht, das den Ringresonator mit dem zweiten Umlaufsinn durchlaufen hat, zur Erzeugung einer Interferenz überlagert ist,

(b) die Mittel zum Auskoppeln von Licht das interferierende Licht auskoppeln und

(c) die Detektoranordnung einen Detektor enthält, der von dem interferierenden Licht beaufschlagt ist.

Erfindungsgemäß erfolgt eine interferometrische Signalauswertung, ähnlich wie sie bei Glasfaser-Kreiselsensoren erfolgt. Diese interferometrische Signalauswertung erfolgt jedoch nicht bei einem mit einer endlichen, langen Glasfaser arbeitenden Sensor sondern mit einem Ringresonator, d.h. einem in sich geschlossenen, relativ kurzen Lichtweg.

Gegenüber einem Glasfaser-Kreiselsensor der erwähnten Art ergibt sich der Vorteil, daß keine lange Glasfaser hoher optischer Qualität erforderlich ist. Die Länge der Glasfaser, welche zu einer Erhöhung der Empfindlichkeit führt, wird ersetzt durch die Finesse des Ringresonators.

Gegenüber einem Laserkreisel ergibt sich der Vorteil eines wesentlich geringeren Aufwandes.

Gegenüber bekannten Sensoren mit passiven Ringresonatoren ergibt sich der Vorteil der Unabhängigkeit von optischer Rückkopplung zwischen Ringresonator und Laser.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

Fig.1    ist eine schematische Darstellung und veranschaulicht das Grundprinzip des Sensors.

Fig.2    ist ein Diagramm und zeigt das Ausgangs-Intensitätssignal des Sensors als Funktion der Winkelgeschwindigkeit für zwei Werte der Finesse F des Ringresonators, nämlich für F = 1 und F = 5.

Fig.3    zeigt eine abgewandelte Ausführung, bei welcher der Arbeitspunkt in einen Punkt größerer Steigung des Diagramms von Fig.2 verlegt werden kann.

Fig.4    zeigt eine weitere abgewandelte Ausführung, bei welcher der Arbeitspunkt in einen Punkt größerer Steigung des Diagramms von Fig.2 verlegt ist.

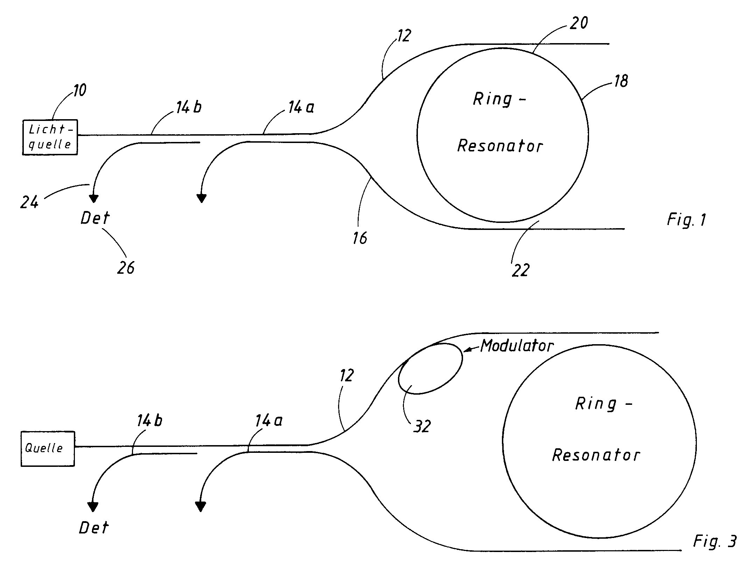

In Fig.1 ist mit 10 eine Lichtquelle bezeichnet. Diese Lichtquelle kann ein Laser sein. Ein Lichtbündel von der Lichtquelle 10 wird auf einen Wellenleiter 12 geleitet. Durch einen Koppler 14a gelangt ein Teil des Lichtbündels in einen Wellenleiter 16. Mit 18 ist ein Ringresonator bezeichnet. Das ist hier ein kreisförmiger Wellenleiter. Der Wellenleiter 12 erstreckt sich von dem Koppler 14b tangential zu dem Ringresonator 18 auf einer ersten Seite dieses Ringresonators 18 (oben in Fig.1). Der Wellenleiter 12 bildet mit dem Ringresonator 18 einen Koppler 20. Über den Koppler 20 wird ein Teil des von der Lichtquelle 10 aus in dem Wellenleiter 12 geleiteten Lichtbündels im Uhrzeigersinn in Fig.1 in den Ringresonator 18 eingekoppelt. In dem Ringresonator 18 läuft also eine Lichtwelle in einem ersten Umlaufsinn, d.h. im Uhrzeigersinn in Fig.1, um. Der Wellenleiter 16 läuft von dem Koppler 14a aus in Richtung des von der Lichtquelle 10 her eingekoppelten Lichtbündels tangential zu dem Ringresonator 18 auf der dem Wellenleiter 12 abgewandten Seite des Ringresonators 18. Der Wellenleiter 16 bildet mit dem Ringresonator 18 einen Koppler 22. Der Koppler 22 liegt dem Koppler 20 im wesentlichen diametral gegenüber. Die Wellenleiter 12 und 16 verlaufen von dem Koppler 14a her beide von links nach rechts in Fig.1. Der Koppler 22 koppelt einen Teil des in dem Wellenleiter 16 laufenden Lichtbündels entgegen dem Uhrzeigersinn in Fig.1 in den Ringresonator 18 ein. In dem Ringresonator 18 läuft also eine Lichtwelle in einem zweiten, zu dem ersten entgegengesetzten Umlaufsinn, d.h. entgegen dem Uhrzeigersinn in Fig.1.

Aus dem Ringresonator 18 wird über den Koppler 20 ein Teil des entgegen dem Uhrzeigersinn in Fig.1 umlaufenden Lichtbündels in den Wellenleiter 12 ausgekoppelt. Dieses ausgekoppelte Lichtbündel läuft in dem Wellenleiter 12 in Richtung auf den Koppler 14a, also dem über Koppler 20 eingekoppelten Lichtbündel entgegen. Von diesem ausgekoppelten Lichtbündel wird in dem Koppler 14a ein Teil ausgekoppelt. Dieses ausgekoppelte Licht wird nicht weiter verwendet und in einen optischen Sumpf geleitet. Über den nachgeschalteten Koppler 14b wird ein weiteres Lichtbündel ausgekoppelt. Dieser ausgekoppelte Teil des "rücklaufenden Lichtbündels läuft in dem Wellenleiter 24 jenseits des Kopplers 14b zu einem photoelektrischen Detektor 26. In entsprechender Weise wird von dem im Uhrzeigersinn in dem Ringresonator 18 umlaufenden Lichtbündel durch den Koppler 22 ein Teil in den Wellenleiter 16 ausgekoppelt. Dieses ausgekoppelte Lichtbündel läuft in dem Wellenleiter 16 in Richtung auf die Koppler 14b und 14a und den Detektor, also von rechts nach links in Fig.1.

In dem Ende 24 überlagert sich das von den Kopplern 20, 14b und 14a ausgekoppelte Lichtbündel, das der entgegen dem Uhrzeigersinn in Fig.1 umlaufenden Lichtwelle des Ringresonators 18 entspricht, dem von dem Koppler 22 ausgekoppelten Lichtbündel, das der im Uhrzeigersinn in Fig.1 umlaufenden Lichtwelle des Ringresonators 18 entspricht. Da beide Lichtbündel nahezu identische Wege zurückgelegt haben, haben sie die gleiche Phase und interferieren miteinander.

An dem Detektor 26 erfolgt daher je nach dem optischen Weglängenunterschied der interferierenden Lichtbündel eine mehr oder weniger starke Lichtüberlagerung. Dieser optische Weglängenunterschied verändert sich durch nichtreziproke optische Effekte, die an dem Ringresonator 18 wirksam werden, beispielsweise durch den Sagnac-Effect, wenn der Ringresonator 18 eine Drehbewegung um eine zu seiner Ebene, der Papierebene in Fig.1, senkrechte Achse ausführt. Es läßt sich zeigen, daß bei der beschriebenen Anordnung mit dem Ringresonator 18 die durch eine solche Drehbewegung hervorgerufene Änderung des optischen Weglängenunterschieds der beiden Lichtbündel in dem Ende 24 proportional zu der Winkelgeschwindigkeit und zu der Finesse F des Ringresonators 18 ist.

Die Finesse F des Ringresonators 18 wirkt ähnlich wie die Windungszahl N bei einer Faserspule eines Glasfaser-Kreiselsensors. Die durch eine Winkelgeschwindigkeit $\Omega$ bei einem Glasfaser-Kreiselsensor mit einer Fläche A infolge des Sagnac-Effektes hervorgerufene Phasenänderung zwischen dem "linksherum" und dem "rechtsherum" laufenden Lichtbündel ist

$$\phi_s^{INT} = \frac{8\pi}{\lambda_0 \cdot c_0} \cdot A \cdot N \cdot \Omega$$

Bei einem Sensor der beschriebenen Art mit einem Ringresonator ist die durch den Sagnac-Effekt zwischen den interferierenden Lichtbündeln hervorgerufene Phasenänderung

$$\phi_s^{RES} = \frac{8}{\lambda_0 \cdot c_0} \cdot A \cdot F \cdot \Omega$$

Bis auf den Faktor $\pi$ ist die Finesse gleichwirkend wie die Windungszahl N. Ein Ringresonator mit einer Finesse $F \geq 300$ entspricht hinsichtlich der Phasenänderung und damit der Empfindlichkeit bei gleicher umschlossener Fläche einem Glasfaser-Kreiselsensor mit N = 100 Windungen.

Quantitativ ergibt sich folgendes:

Die Steilheit des Signalverlaufes in der Nähe des Arbeitspunktes $\phi_s = 0$ ist ein Maß für das Auflösungsvermögen des Sensors für kleine, nichtreziproke Phasenverschiebungen. Für kleine, nichtreziproke Phasenverschiebungen $\phi_s$ ($\phi_s << 2$) kann das Detektorsignal $I(\phi_s)$ mit sehr guter Genauigkeit angenähert werden durch

$$I(\varphi_s) = \frac{4\,(1-a)^2 \cdot (a \cdot \varphi_s)}{((1-a)^2 + (a \cdot \varphi_s)^2}$$

($I_{max}(\phi_s)$ = 1). Der Resonatorparameter

$$a = (1-\gamma)(1-R)\,e^{-\alpha L_R}$$

ist dabei die Intensitätstransmission des Resonators 18 für einen Umlauf im Resonator 18. Die Steilheit von $I(\phi_s)$ in einem beliegigen Arbeitspunkt wird durch die Finesse F des Ringresonators 18

$$F = \pi\,\sqrt{\frac{1+a^2}{2\,(1-a)^2}}$$

bestimmt.

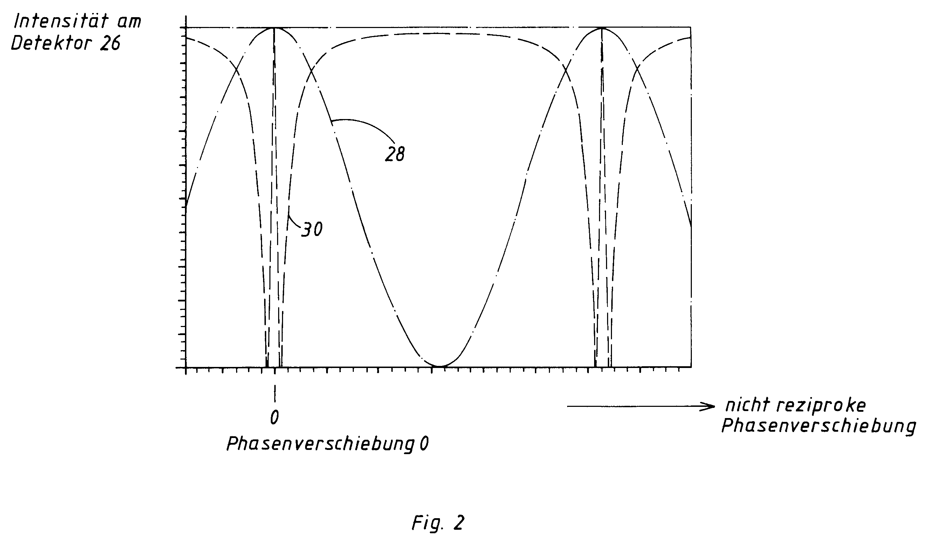

In Fig.2 ist das Ausgangs-Intensitätssignal am Detektor 26 in Abhängigkeit von der Winkelgeschwindigkeit um eine zur Ebene des Ringresonators 18 senkrechte Achse für Werte der Finesse von F = 1 unf F = 5 dargestellt. Mit 28 ist die Kennlinie für F = 1 bezeichnet. Mit 30 ist die Kennlinie für F = 5 bezeichnet. Man sieht, daß die Kennlinien umso steiler werden, je größer die Finesse des Ringresonators ist. Man erkennt auch, daß der Arbeitspunkt des Sensors in den Bereich der Kennlinie mit der größten Steigung gelegt werden sollte.

Dafür gibt es verschiedene Möglichkeiten.

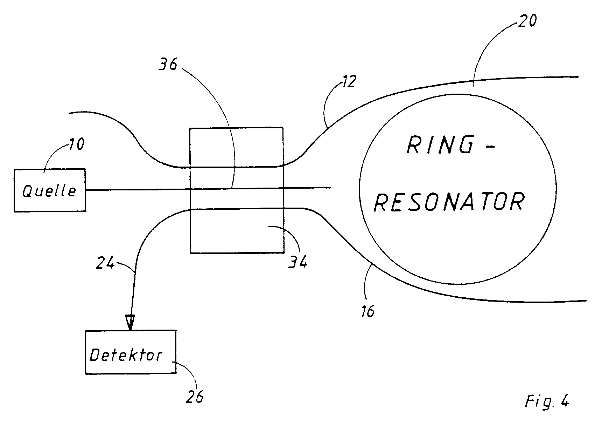

Die Ausführung von Fig.3 ist ähnlich aufgebaut wie die Ausführung von Fig.1. Entsprechende Teile sind in Fig.3 mit den gleichen Bezugszeichen versehen wie in Fig.1. In den Wellenleiter 12 ist dort ein Phasenmodulator 32 eingeschaltet.

Es gilt, eine definierte zusätzliche nichtreziproke Phasenverschiebung zwischen den beiden im Ende 24 des Wellenleiters zur Interferenz gebrachten Lichtbündeln zu erzeugen, um den Arbeitspunkt (entsprechend einer Winkelgeschwindigkeit null) an eine gewünschte Stelle der Kennlinie legen zu können. Dazu muß die dem vorlaufenden Lichtbündel im Wellenleiter 12 erteilte Phasenverschiebung verschieden sein von der Phasenverschiebung, die das rücklaufende (d. h. nichtreziprok) Lichtbündel erfährt. Eine konstante Phasenverschiebung in dem Wellenleiter 12 würde nicht zu der gewünschten Verlagerung des Arbeitspunktes führen. Eine solche Phasenverschiebung würde sich in beiden Lichtbündeln gleich (d. h. reziprok) auswirken. Der Phasenmodulator 32 wird jedoch mit einer solchen Frequenz betrieben, daß die dadurch hervorgerufene Phasenverschiebung für das vorlaufende Lichtbündel und das daraus abgeleitete aber in endlicher Zeit über den Ringresonator 18 gelaufene, rücklaufenden Lichtbündel unterschiedlich ist. Die hierfür erforderliche Frequenz des Phasenmodulators läßt sich abschätzen.

Es kann dabei eine ähnliche Betrachtung angewandt werden, wie sie für einen Faserkreisel von J.L. Davis und S. Ezekiel in "Opt. Lett." (6), pp. 505, (1981) angestellt wird. Für einen Faser-Ringresonator hoher Güte und Umlaufverlusten $V_R \ll 1$ ergibt sich als Faustformel für die erforderliche Modulationsfrequenz

$$f_m = \frac{0{,}4\,V_R^2}{f_R}$$

wobei $f_R$ = n $L_R/c_0$ die Umlaufzeit des Lichtes in dem Resonator mit der einfachen Umlauflänge $L_R$ und dem Brechungsindex n ist. Für Verluste von z.B. $V_R$ 3% - 5% und einer Faserumlauflänge von $L_R$ = 80 cm ergeben sich damit Modulationsfrequenzen in der Größenordnung von

$f_m$ = 100 kHz.

Fig.4 zeigt eine Ausführung, bei welcher die Phasenverschiebung von 120° eines Sechstorkopplers 34 benutzt wird, um den Arbeitspunkt auf etwa ein Drittel der Maximalhöhe der Kennlinie zu setzen. Der Sechstorkoppler koppelt einen Lichtleiter 36 mit den beiden Lichtleitern 12 und 16. Der Lichtleiter 36 ist zu der Lichtquelle 10 geführt. Aus dem Lichtleiter 36 wird in dem Sechstorkoppler 34 ein vorlaufendes Lichtbündel in den Lichtleiter 12 eingekoppelt. Dieses Lichtbündel läuft zu dem Ringresonator 18 und wird durch den Koppler 20 im Uhrzeigersinn in Fig.1 in den Ringresonator 18 eingekoppelt. Aus dem Lichtleiter 36 wird weiterhin in dem Sechstorkoppler ein vorlaufendes Lichtbündel in den Lichtleiter 16 eingekoppelt. Dieses Lichtbündel läuft zu dem Ringresonator 18 und wird durch den Koppler 22 entgegen dem Uhrzeigersinn in Fig.1 in den Ringresonator eingekoppelt.

Von den rücklaufenden Lichtbündeln überlagert sich wieder in dem Ende 24 das in dem Lichtleiter 16 zurücklaufende Lichtbündel und das von dem Lichtleiter 12 her in dem Sechstorkoppler 34 in das Ende 24 eingekoppelte rücklaufende Lichtbündel des Lichtleiters 12. Die interferierenden Lichtbündel fallen auf den Detektor 26.

Die Lichtquelle 10 kann ein Laser sein. In diesem Fall muß die Frequenz des Lasers mit bekannten Mitteln auf die Resonanzfrequenz des Ringresonators 18 abgestimmt werden. Die beschriebene Anordnung gestattet aber auch daß die Lichtquelle (10) ein breitbandiger, inkohärenter Strahler ist, in dessen Band eine Resonanzfrequenz des Ringresonators liegt. Beispielsweise kann die Lichtquelle (10) eine Superluminiszenzdiode sein.

Die Lichtleiter und der Ringresonator können von lichtleitenden Fasern, z.B. Glasfasern, gebildet sein. Es ist aber auch möglich, daß die Lichtleiter und der Ringresonator von Wellenleitern gebildet sind, die in integrierter Optik in einem Substrat gebildet sind.

**Patentansprüche**

1. Sensor, der einen nichtreziproken optischen Effekt benutzt, enthaltend einen passiven Ringresonator (18) mit einem in sich geschlossenen Lichtweg, eine Lichtquelle (10), Mittel (20,22) zum Einkoppeln des Lichtes der Lichtquelle (10) in den Ringresonator (18) mit einem ersten und einem dazu entgegengesetzten zweiten Umlaufsinn, Mittel (22,20) zum Auskoppeln von Licht aus dem Ringresonator (18) und eine von dem ausgekoppelten Licht beaufschlagte Detektoranordnung (26), **dadurch gekennzeichnet, daß**

   (a) das Licht, das den Ringresonator (18) in dem ersten Umlaufsinn durchlaufen hat, dem Licht, das den Ringresonator (18) mit dem zweiten Umlaufsinn durchlaufen hat, zur Erzeugung einer Interferenz überlagert ist und
   (b) die Detektoranordnung einen Detektor enthält, der von dem interferierenden Licht beaufschlagt ist.

2. Sensor nach Anspruch 1, **dadurch gekennzeichnet, daß** die Lichtquelle ein breitbandiger, inkohärenter Strahler ist, in dessen Band eine Resonanzfrequenz des Ringresonators liegt.

3. Sensor nach Anspruch 2, **dadurch gekennzeichnet, daß** die Lichtquelle eine Superluminiszenzdiode oder ein Kantenemitter (edge light emitting diode, ELED) ist.

4. Sensor nach einem der Ansprüche 1 bis 3, **dadurch gekennzeichnet, daß** das Interferometer einen Sechstorkoppler enthält.

5. Sensor nach einem der Ansprüche 1 bis 3, **dadurch gekennzeichnet, daß**
   (a) der Ringresonator (18) ein in sich geschlossener Lichtleiter ist,
   (b) ein ein erstes Lichtbündel von der Lichtquelle (10) führender erster Lichtleiter (12) im wesentlichen tangential zu dem Ringresonator (18) verläuft und mit dem Ringresonator (18) durch einen ersten Koppler (20) gekoppelt ist,
   (c) ein ein zweites, mit dem ersten kohärentes Lichtbündel von der Lichtquelle (10) führender Lichtleiter (16) im wesentlichen tangential zu dem Ringresonator (18) auf dessen dem ersten Lichtleiter (12) abgewandter Seite verläuft und mit dem Ringresonator (18) durch einen zweiten Koppler (22) gekoppelt ist, wobei der Umlaufsinn des durch den zweiten Koppler in den Ringresonator eingespeisten Lichtes dem Umlaufsinn des durch den ersten Koppler in den Ringresonator eingespeisten Lichtes entgegengerichtet ist,

(d) Interferometermittel (14a,14b,24) vorgesehen sind, mittels derer ein von dem ersten Koppler (20) ausgekoppeltes Lichtbündel, das von dem durch den zweiten Koppler (22) eingekoppelten Licht gebildet ist, einem von dem zweiten Koppler (22) ausgekoppelten Lichtbündel, das von dem durch den ersten Koppler (20) eingekoppelten Licht gebildet ist, zur Erzeugung von Interferenzen überlagerbar ist und

(e) der Detektor (26) von den überlagerten, interferierenden Lichtbündeln beaufschlagt ist.

6. Sensor nach Anspruch 5, **dadurch gekennzeichnet, daß** das zweite Lichtbündel von einem zwischen erstem und zweitem Lichtleiter (12,16) vorgesehenen dritten Koppler (14a) und vierten Koppler (14b) aus dem ersten Lichtleiter ausgekoppelt ist.

7. Sensor nach Anspruch 6, **dadurch gekennzeichnet, daß** in den ersten Lichtleiter zwischen dem dritten Koppler und dem ersten Koppler ein Phasenmodulator (32) angeordnet ist.

8. Sensor nach Anspruch 5, **dadurch gekennzeichnet, daß**

(a) ein Sechstorkoppler (34) vorgesehen ist, der den ersten, den zweiten und einen dritten Lichtleiter (12,16,36) miteinander koppelt, und

(b) die Lichtquelle (10) mit dem dritten Lichtleiter (36) so verbunden ist, daß Lichtbündel aus dem dritten Lichtleiter in Richtung auf den Ringresonator (18) sowohl in den ersten als auch in den zweiten Lichtleiter (12 bzw. 16) eingekoppelt werden.

9. Sensor nach einem der Ansprüche 5 bis 8, **dadurch gekennzeichnet, daß** die Lichtleiter und der Ringresonator von lichtleitenden Fasern gebildet sind.

10. Sensor nach einem der Ansprüche 5 bis 8, **dadurch gekennzeichnet, daß** die Lichtleiter und der Ringresonator von Wellenleitern gebildet sind, die in integrierter Optik in einem Substrat gebildet sind.

Fig. 1

Fig. 3

Fig. 2

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 393 987 (BRITISH AEROSPACE) | 1,5,6,7,9 | G01C19/72 |
| Y | * das ganze Dokument * | 2-4,8,10 | |
| | --- | | |
| Y | US-A-4 653 917 (MOELLER ET AL.) | 2-4,8 | |
| | * Zusammenfassung * | | |
| | --- | | |
| Y | DE-A-3 501 975 (NORTHROP) | 10 | |
| | * Zusammenfassung * | | |
| | --- | | |
| X | EP-A-0 393 968 (BRITISH AEROSPACE) | 1,5-7,9 | |
| | * das ganze Dokument * | | |
| | ----- | | |

RECHERCHIERTE SACHGEBIETE (Int. Cl.5 )

G01C

Der vorliegende Recherchenbericht wurde für alle Patentansprüche erstellt

| Recherchenort | Abschlußdatum der Recherche | Prüfer |
|---|---|---|
| DEN HAAG | 04 JANUAR 1993 | HOEKSTRA F.R. |